# EUROPEAN PATENT SPECIFICATION

(11) **EP 3 134 633 B1**
(45) Date of publication and mention of the grant of the patent: **05.12.2018**
(21) Application number: 14731305.0
(22) Date of filing: 23.04.2014
(51) Int. Cl.: H04L 12/40, F02D 41/26, F02D 41/24, F02D 41/22, H04L 29/08

(54) **DISTRIBUTED CONTROL**
VERTEILTE STEUERUNG
COMMANDE RÉPARTIE

(43) Date of publication of application: 01.03.2017
(73) Proprietor: Wärtsilä Finland Oy, 65100 Vaasa (FI)
(72) Inventor: KAAS, Tom, FI-65410 Solf (FI); STRANDBERG, Leif, FI-66100 Malax (FI)
(74) Representative: Berggren Oy, Helsinki & Oulu
(86) International application number: PCT/FI2014/050292
(87) International publication number: WO 2015/162332

(56) References cited:
- EP-A1- 1 591 649
- DE-A1- 10 113 917
- DE-A1-102011 080 989
- JP-A- S6 017 502
- JP-A- S63 316 962

## Description

### TECHNICAL FIELD

The present invention relates to a distributed control arrangement that is applicable controlling an engine, for example an internal combustion engine. In particular, some embodiments of the present invention relate to distributed control of an engine using a control arrangement comprising two or more mutually redundant control modules.

### BACKGROUND

Increasing complexity of engine control systems calls for design that ensures correct operation also in case a failure or misconfiguration of a component of the control system. A control system may be considered to employ a control function that derives a control signal for controlling operation of the engine on basis of an internal state of the control function. The internal state, in turn, typically depends on one or more most recently received measurement signals and possibly also on one or more most recently issued control signals.

A known solution that at least partially addresses this challenge involves use of a distributed control arrangement where two mutually redundant control entities that are capable of carrying out a similar control function are available. In such an arrangement one of the control entities operates as an active control entity that is applied to provide the control signal on basis of the internal state, while the other control entity is kept in a stand-by state and it serves as back-up control entity that can be activated in case of a fault condition of the active control entity.

However, in such an approach one challenge lies in handing over the control from the failed or to-be-failing active control entity to the back-up control entity in a manner that does not result in a discontinuity in operation of the control arrangement.

A known approach for implementing the handover involves transferring the internal state information to the back-up control entity in response to detecting the fault condition of the active control entity in order to enable continuing the control from the up-to-date internal state. However, shortcomings in such an approach include delay in detecting the fault condition and hence delay in initiating the handover, as well as delay involved in transferring the internal state to the back-up entity. These delays are likely to result in delay in activation of the selected back-up entity and hence cause a discontinuity in operation of the control arrangement.

An approach to partially alleviate this shortcoming involves continuously keeping also the back-up entity updated with the latest values of the measurement signals by providing the measurement signals thereto as they become available. However, to ensure synchronization between the information available in the active control entity and in the back-up entity, this approach requires providing the measurement signals with timestamps - which typically results in drastic increase in the amount of the measurement data transferred to the control entities in order to enable useful accuracy of the timing information - which is likely to cause either increased latency in communicating the measurement signals to the control entities or require a higher-capacity (and hence more expensive) communication link between the control entities. Moreover, while this approach may enable keeping the back-up entity informed with the measurement signals, it fails to address the delay involved in initiating the handover and, unless the state is completely defined by the received measurement signals, it also fails to address the delay involved in transfer of the internal state.

### SUMMARY

Therefore, it is an object of the present invention to provide a technique that enables operating a distributed control arrangement that relies on mutually redundant control entities in a reliable manner also in case of a fault condition of a component of the control arrangement. In particular, an object of the present invention is to enable avoiding or minimizing the effect of a discontinuity caused by a handover of the active control entity status from one control entity to another, thereby enabling improved reliability of the control arrangement. A further object of the present invention is to provide such control arrangement that keeps the amount of data transferred within the control arrangement at a reasonable level, thereby enabling a cost-efficient design of the control arrangement.

The object(s) of the invention are reached by a control arrangement and by a method as defined by the respective independent claims.

According to an example embodiment, a control arrangement for controlling an engine is provided. The control arrangement comprises two or more mutually redundant acting control modules for providing respective instances of a control function configured to derive a control parameter for adjusting operation of the engine at least on basis of at least one measurement parameter that is descriptive of the engine operation, a supervising control module for managing operation of said two or more acting control modules, and a bus for transfer of information, said bus arranged to connect said control modules to each other. The supervising control module is configured to, for each new value of said at least one measurement parameter, determine, in response to receiving a new value for at least one measurement parameter, reception of said new value in one or more acting control modules, issue, in response to having determined reception of said new value in at least a first predefined number of the acting control modules, an execution command to cause the respective acting control modules to execute the respective instance of the control function to derive a new value for the control parameter, and issue, in response to at least a second predefined number of the acting control modules having executed the control function, an actuation command to cause provision of the new value of the control parameter derived by exactly one of the acting control modules for adjusting operation of the engine.

According to another example embodiment, a method for controlling an engine by using a control arrangement is provided, wherein the control arrangement comprises two or more mutually redundant acting control modules for providing respective instances of a control function configured to derive a control parameter for adjusting operation of the engine at least on basis of at least one measurement parameter that is descriptive of the engine operation, a supervising control module for managing operation of said two or more acting control modules, and a bus for transfer of information, said bus arranged to connect said control modules to each other. The method comprises, for each new value of said at least one measurement parameter, determining, in response to receiving a new value for at least one measurement parameter, reception of said new value in one or more acting control modules, issuing, in response to having determined reception of said new value in at least a first predefined number of the acting control modules, an execution command to cause the respective acting control modules to execute the respective instance of the control function to derive a new value for the control parameter, and issuing, in response to at least a second predefined number of the acting control modules having executed the control function, an actuation command to cause provision of the new value of the control parameter derived by exactly one of the acting control modules for adjusting operation of the engine.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings.
Figure 1 schematically illustrates some components of a control arrangement according to an example embodiment.
Figure 2 illustrates an exemplifying method according to an example embodiment.
Figures 3a to 3h illustrate information flow within a control arrangement according to an example embodiment.
Figure 4 schematically illustrates some components of an exemplifying apparatus for providing a control module according to an example embodiment.

### DESCRIPTION OF SOME EMBODIMENTS

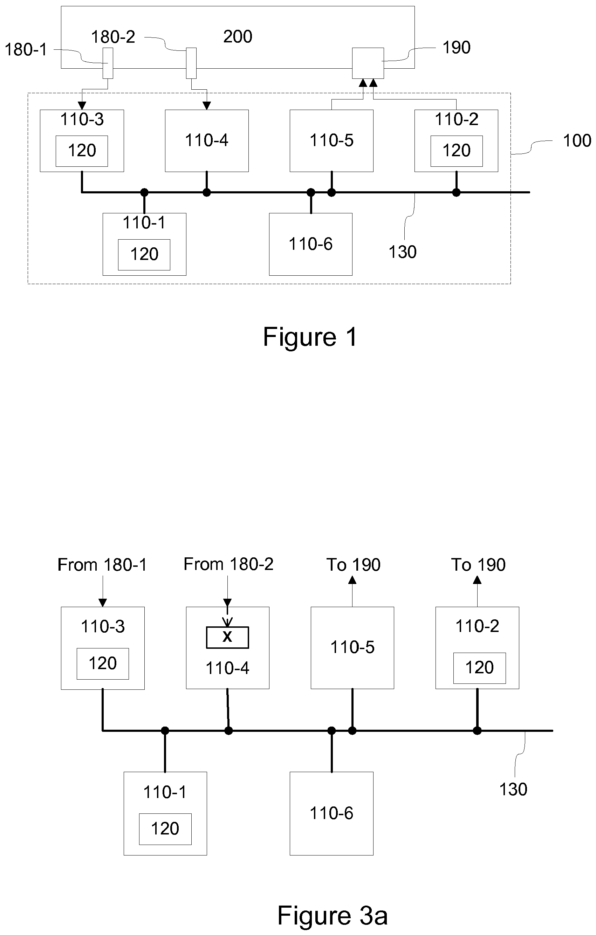

Figure 1 schematically illustrates some components of a distributed control arrangement 100. The control arrangement 100 may be applied to control operation of an engine 200. The control arrangement 100 is connectable to sensors 180-1 and 180-2 that are arranged to capture a respective sensor parameter that is descriptive of a respective desired characteristic of operation of the engine 200. The control arrangement 100 is further connectable to an actuator 190 that is arranged to adjust a desired aspect of operation of the engine 200 on basis of the control parameter derived and issued by the control arrangement 100.

Figure 1 depicts, for clarity of illustration and description, two sensors 180-1 and 180-2 and a single actuator 190. However, in general, the control arrangement 100 may receive a respective measurement parameter from one or more sensors 180. Multiple sensors 180 may be employed, for example, to capture respective measurement parameters that describe the same characteristic at different parts of the engine 200 or they may be employed to capture respective measurement parameters that describe different characteristics of operation of the engine 200. Alternatively or additionally, the control arrangement 100 may be arranged to derive and issue a plurality of control parameters to adjust respective aspects of operation the engine 200 via respective plurality of actuators 190.

The engine 200 may comprise an internal combustion engine (ICE), for example a reciprocating piston engine. The sensor(s) 180 may be arranged to measure one or more desired characteristic(s) descriptive of the engine operation, while the actuator(s) 190 may be arranged to adjust desired aspect of the engine operation in control of the respective control parameters derived and issued by the control arrangement 100. As non-limiting examples in this regard, the one or more sensors 180 and the one or more actuators may be applied to implement one or more of the following control functionalities for the engine 200:
- Knock control where one or more sensors 180 are arranged to measure a cylinder pressure of the engine 200 and where one or more actuators 190 are arranged to adjust fuel injection duration in the respective cylinder of the engine 200 accordingly;
- Speed control where one or more sensors 180 are arranged to measure speed of the engine 200 and where one or more actuators are arranged to adjust fuel injection duration or fuel rack position in the engine 200 accordingly;
- Wastegate control where one or more sensors 180 are arranged to measure receiver air pressure in the engine 200 and where one or more actuators 190 are arranged to control a wastegate in the engine 200 accordingly;
- Main fuel pressure control or pilot fuel pressure control (for a diesel (CR) engine) where one or more sensors 180 are arranged to measure respective fuel pressure in the engine 200 and where one or more actuators 190 are arranged to control a respective flow control valve of the engine 200 accordingly;
- Main fuel pressure control or pilot fuel pressure control (for a gas engine) where one or more sensors 180 are arranged to measure respective fuel pressure in the engine 200 and where one or more actuators 190 are arranged to control a respective gas valve unit of the engine 200 accordingly; and/or
- Cooling control where one or more sensors 180 are arranged to measure receiver air temperature in the engine 200 and where one or more actuators 190 are arranged to adjust cooling liquid (e.g. cooling water) recirculation valve in the engine 200 accordingly.

The exemplifying control arrangement 100 depicted in Figure 1 comprises control modules 110-1, 110-2, 110-3, 110-4, 110-5 and 110-6, wherein a single control module may be referred to as the control module 110-i, while the control modules included in the control arrangement as a group may be referred to as the control modules 110. The number of control modules 110 in the exemplifying control arrangement 100 is chosen for purposes of illustration of different roles that may be assigned to a given control module 110-i. In general, various embodiments of the present invention employ two or more control modules 110, as described in more detail in the following.

The control modules 110 are communicatively coupled to each other. The control modules 110 may be interconnected by a bus 130. The bus 130 may comprise, for example, a first bus serving as a data bus for transfer of data and a second bus serving as a control bus for transfer of control information. As another example, the bus 130 may comprise a single bus that is able to operate both as the data bus and the control bus. The data transfer via the bus 130 is, preferably, asynchronous, thereby enabling efficient transfer of data without a need for a centralized control. As an example, the bus 130 may be provided as a controller area network (CAN) bus, defined e.g. in the ISO 11898 series of standards, e.g. as a CAN bus according the ISO 11898-1 standard.

Although depicted in the example of Figure 1 as the data bus, the data transfer between the control modules 110 may be provided by using any communication media. In general, the control modules 110 may be connected to each other using a computer network of desired network topology known in the art and the communication may be provided using any suitable communication protocol known in the art.

The control arrangement 100 comprises at least two control modules 110 that are mutually redundant control modules, each of which is arranged to provide a respective instance of the same predefined control function 120 that is applicable for deriving one or more control parameters for controlling or adjusting operation of the engine 200. A control module 110-i that is arranged to implement a respective instance of the control function 120 is herein referred to as an acting control module 110-i.

A given control module 110-i serving as an acting control module may be a dedicated acting control module or it may operate as the acting control module in addition to one or more other tasks assigned to the given control module 110-i. In the example of Figure 1, the control modules 110-1 and 110-2 represent control modules that dedicated for operating as acting control modules, whereas the control module 110-3 represents a control module that operates as an acting control module but that also serves an additional role (as an input control module, as will be described later in this text). Hence, in the example of Figure 1, each of the control modules 110-1, 110-2 and 110-3 are configured to implement the respective instance the control function 120.

In general, an acting control module 110-i implementing its instance of the control function 120 is arranged to derive at least one control parameter at least on basis of at least one measurement parameter. The one or more measurement parameters may originate from the respective sensor(s) 180, whereas the one or more control parameters may be provided to the respective actuator(s) 190. The details of the control function are outside of the scope of the present invention.

In general, the control function 120 may be arranged to derive the at least one control parameter on basis of an internal state of the control function. The internal state may depend e.g. on one or more of the following:
- one or more most recently received values of one or more measurement parameters,
- one or more most recently derived values of one or more control parameters, and
- one or more intermediate parameters derived on basis of at least one of the above.

The internal state is a characteristic of a certain control module 110-i and it is derived and/or updated in the respective control module 110-i independently of the internal state(s) of the other control modules 110.

A control module 110-i may be configured to operate or serve as an input control module for obtaining a value of at least one measurement parameter. In this regard, the control module 110-i serving as the input control module may be connectable (or connected) to one or more sensors 180-1, 180-2 in order to obtain the respective measurement parameter(s) for provision to the other control modules 110 via the bus 130.

A given control module 110-i serving as an input control module may be a dedicated input control module or it may operate as the input control module in addition to one or more other tasks assigned to the given control module 110-i. In the example of Figure 1 the control module 110-3 (connectable to the sensor 180-1) represents a control module that also serves as an acting control module, whereas the control module 110-4 (connectable to the sensor 180-2) represents a dedicated input control module.

An input control module 110-3, 110-4 may be arranged to obtain (e.g. read) a new sensor value from the respective sensor 180-1, 180-2 in response to a command from a supervising control module (which will be described later in this text), whereas the supervising control module may be arranged to issue such command according to a predefined schedule, e.g. at regular or essentially regular intervals. As another example, an input control module 110-3, 110-4 may be pre-configured to obtain the new sensor value according to the predefined schedule without explicit commands from the supervising control module. The input control module 110-3, 110-4 may be further arranged to obtain a new value of the respective control parameter for provision to other control modules 110 via the bus 130 each time a new sensor value is obtained. The value of the measurement parameter may be derived on basis of the sensor value, e.g. as the obtained sensor value as such. Consequently, the internal states of the instances of control function 120 can be kept updated with the current state of the engine 200 operation regardless of any changes observed by the sensors 180-1, 180-2.

As a further example, an input control module 110-3, 110-4 may be arranged to make the new value of the control parameter available to the other control modules 110 only when it detects a change in the sensor value or in the control parameter value that (has an absolute value that) is larger than a predefined change threshold. Consequently, the data transfer via the bus 130 can be limited to those occasions where the respective characteristic of the engine 200 operation exhibits a change that is considered be non-insignificant.

The input control module 110-3, 110-4 may be arranged to provide the new value of the measurement parameter to all other control modules 110 or to a limited subset of the other control modules 110. As a particular example, the input module 110-3, 110-4 may be arranged to provide the new value of the measurement parameter only to the supervising control module or to the supervising control module and to the acting control modules 110-1, 110-2, 110-3.

A control module 110-i may be configured to operate or serve as an output control module for providing the derived control parameter derived by one of the acting control modules to the actuator 190. In this regard, the control module 110-i serving as the output control module may be connectable (or connected) to the actuator 190 in order to cause the actuator 190 to adjust operation of the engine 200 accordingly and hence capable of providing the control parameter derived by the control arrangement 100 to the actuator 190.

A given control module 110-i serving as an output control module may be a dedicated output control module or it may operate as the output control module in addition to one or more other tasks assigned to the given control module 110-i. In the example of Figure 1 the control module 110-2 represents a control module that also serves as an acting control module, whereas the control module 110-5 represents a dedicated output control module.

One of the control modules 110-i is arranged to operate as a supervising control module for managing operation of the control arrangement 110 and, in particular, for managing operation of one or more other control modules 110 of the control arrangement 100. A given control module 110-i serving as a supervising control module may be a dedicated supervising control module or it may operate as the supervising control module in addition to one or more other tasks assigned to the given control module 110-i. In the example of Figure 1 the control module 110-6 represents a dedicated supervising control module. However, any one of the other control modules 110 may be arranged to operate as the supervising control module instead.

The supervising control module 110-6 may be arranged to control at least one or more of the following aspects of the operation of the control arrangement 100 for each new value of the measurement parameter via one of the input control modules 110-3, 1104:
- synchronize transfer of the measurement parameter from the input control modules 110-3, 110-4 to other control modules 110 of the control arrangement 100;
- execution of the instances of the control function 120 in the acting control modules 110-1, 110-2 and/or 110-3 of the control arrangement 100;
- provision of the control parameter to the actuator 190 from the control arrangement 100.

In the following, detailed examples of the operation of the control arrangement 100 according to this outline will be described.

As described in the foregoing, the input control module 110-3, 110-4 may be arranged to obtain new measurement parameter values e.g. in control of the supervising control module 110-6 or in accordance with a predefine schedule without explicit control from the supervising control module 110-6. Regardless of the arrangement of obtaining the new measurement parameter values, the supervising control module 110-6 may be arranged to control provision of a measurement parameter received from the input control module 110-3, 110-4 to the other modules. In this scenario, the input control module 110-3, 110-4 may be arranged to provide the new value of the measurement parameter only to the supervising control module 110-6, and the supervising control module 110-6 may be configured to pass the new measurement parameter value, via the bus 130, to one or more other control modules 110. As examples, in this scenario the supervising control module 110-6 may be configured to pass the new measurement parameter value to all other control modules 110 or only to the acting control modules 110-1, 110-2, 110-3.

Alternatively, in a scenario where the input control module 110-3, 110-4 is arranged to provide the new value of the measurement parameter directly to all other control modules 110 or at least to the acting control modules 110-1, 110-2, 110-3, the supervising control module 110-6 may not need to be involved in managing the provision of the new measurement parameter value from the input control modules 110-3, 110-4. However, in this scenario the supervising control module 110-6 may receive, from the input control module 110-3, 110-4, the new measurement parameter value or an indication regarding a new measurement parameter value having been made available (at least) to the acting control modules 110-1, 110-2, 110-3.

The supervising control module 110-6 may be further arranged to, in response to having itself received a new value of a measurement parameter from the input control module 110-3, 110-4 or an indication regarding a new value of a measurement parameter having been received, determine reception of the new parameter value by the acting control modules 110-1, 110-2, 110-3. In other words, the supervising control module 110-6 may be arranged to ensure data synchronization between the acting control modules 110-1, 110-2, 110-3 with respect to reception of the new value of a measurement parameter.

As an example in this regard, the supervising control module 110-6 may be configured to monitor reception of the new value of the control parameters in the acting control modules 110-1, 110-2, 110-3. The monitoring may be based on reception indications sent from the acting control modules 110-1, 110-2, 110-3. In this regard, each of the acting control modules 110-1, 110-2, 110-3 may be arranged to transmit, via the bus 130, a reception indication addressed to the supervising control module 110-6 (and possibly also to other control modules 110) in response to having received the new value of a measurement parameter. The reception indication may include the new value of the measurement parameter as received in the respective acting control module 110-1, 110-2, 110-3. In parallel, the supervising control module 110-6 may be arranged to monitor, in response to having itself received a new value of the measurement parameter (or an indication thereof) from the input control module 110-3, 110-4, the reception indications concerning the same new value of the measurement parameter from the acting control modules 110-1, 110-2, 110-3. Consequently, the supervising control module 110-6 may be arranged to consider the acting control modules 110-1, 110-2, 110-3 that have provided the respective reception indications to be synchronized with respect to reception of the latest value of the measurement parameter.

As an alternative approach for determining the data synchronization between the monitoring approach, the supervising control module 110-6 may be arranged to refrain from active monitoring of the reception indications from the acting control modules 110-1, 110-2, 110-3 and to rely on a waiting period *T_{w}* of a predetermined duration (e.g. in order of a few milliseconds) instead. In this approach, the supervising control module 110-6 may assume that all acting control modules 110-1, 110-2, 110-3 have received a new value of a measurement parameter when the waiting period *T_{w}* has elapsed since reception of the new value of the measurement parameter (or an indication thereof) in the supervising control module 110-6 and thereby consider the acting control modules 110-1, 110-2, 110-3 to be synchronized (with respect to reception of the latest value of the measurement parameter) after the waiting period *T_{w}* has elapsed.

In the approach that involves the supervising control module 110-6 monitoring the reception indications from the acting control modules 110-1, 110-2, 110-3, the waiting period *T_{w}* may be, optionally, applied such that the supervising control module 110-6 is configured to consider the acting control modules 110-1, 110-2, 110-3 that have not provided the respective reception indication within the waiting period *T_{w}* since reception of the new value of the measurement parameter (or an indication thereof) in the supervising control module 110-6 to exhibit a fault condition.

The supervising control module 110-6 may be arranged to issue an execution command in response to having determined (or assumed) successful reception of the new value of the control parameter in at least a predefined number of the acting control modules 110-1, 110-2, 110-3 (in other words, in response to having ensured data synchronization between acting control modules). The predefined number is preferably at least two. The predefined number may be set to a value that requires having ensured the new parameter value having been received by each of the acting control modules 110-1, 110-2, 110-3. The execution command may be provided, via the bus 130, and it may be addressed to all control modules 110, to all acting control modules 110-1, 110-2, 110-3 or it may be addressed only to those acting control modules that have provided the respective reception indications to the supervising control module 110-6. The acting control modules 110-1, 110-2, 110-3 to which the execution command is addressed are configured to execute the respective instances of the control function 120 in response to receiving the execution command.

Consequently, since the separate instances of the control function 120 are executed in at least some of the acting control modules 110-1, 110-2, 110-3 based on synchronized value(s) of the measurement parameter, also the new value for the control parameter derived on each of the acting control modules 110-1, 110-2, 110-3 as well as the internal states of the instances of the control function 120 thereat remain synchronized. This makes it possible to apply the new value of the control parameter derived by any of the acting control modules 110-1, 110-2, 110-3 as the output of the control arrangement 100. Moreover, this also facilitates a seamless handover of the acting control module 110-1, 110-2, 110-3 that is currently in charge of deriving the value of the control parameter that is to be delivered the actuator 190 (as will be described in more detail later in this text).

After having executed the respective instances of the control function 120, each of the acting control modules 110-1, 110-2, 110-3 is arranged to provide a respective execution indication in this regard at least to the supervising control module 110-6 (and possibly also to other control modules 110, e.g. to the output control modules 110-2, 110-5). The execution indication may include the value of the control parameter derived in the respective acting control module 110-1, 110-2, 110-3.

The supervising control module 110-6 may be arranged to monitor reception of the execution indications from the acting control modules 110-1, 110-2, 110-3 and to issue an actuation command in order to control exactly one of the output control modules 110-2, 110-5 to provide the derived control parameter, via the bus 130, to the actuator 190. As example in this regard, the supervising control module 110-6 may be arranged to issue the actuation command in response to having received the execution indications from all acting control modules 110-1, 110-2, 110-3, in response to having received the execution indication from at least a predetermined number of acting control modules 110-1, 110-2, 110-3 or in response to having received the execution indication from at least one of the acting control modules 110-1, 110-2, 110-3.

The actuation command is addressed to exactly one of the output control modules 110-2, 110-5 and it is arranged to cause this output control module 110-2, 110-5 to provide the new value of the control parameter derived by a selected acting control module 110-1, 110-2, 110-3 to the actuator 190. The actuation command may comprise the derived new value of the control parameter. Alternatively, the selected acting control module 110-1, 110-2, 110-3 may be configured to provide the new value of the control parameter derived therein to the output control module 110-2, 110-5.

The selected acting control module 110-1, 110-2, 110-3 serving as the source of the new value of the control parameter to be provided to the actuator 190 may be e.g. the acting control module 110-1, 110-2, 110-3 that has been the first to provide the respective execution indication to the supervising control module 110-6 or an acting control module that is randomly selected among those acting control modules 110-1, 110-2, 110-3 that have provided the respective execution indications to the supervising control module 110-6.

As another example, one of the acting control modules 110-1, 110-2, 110-3 may be pre-assigned as the master control module, and the supervising control module 110-6 may be configured to issue the actuation command in response to having received the execution indication at least from the master control module. On the other hand, the supervising control module 110-6 may be arranged to consider the master control module to exhibit a fault condition in response to a failure to receive the execution indication therefrom with the waiting period *T_{w}* since having received the first execution indication from any other one of the acting control modules 110-1, 110-2, 110-3 and, consequently, to assign one of the other acting control modules 110-1, 110-2, 110-3 as the master control module for subsequent executions of the control function 120.

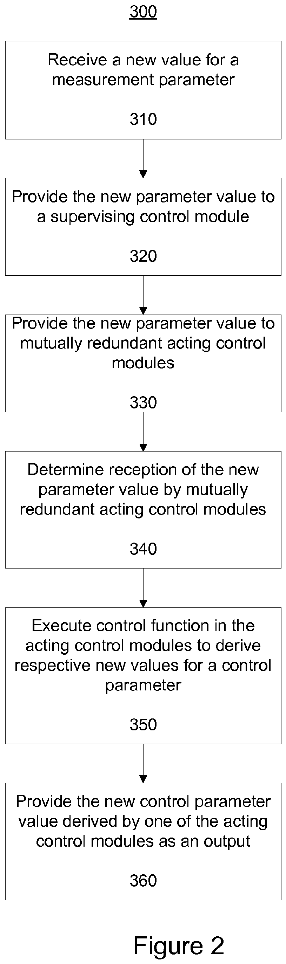

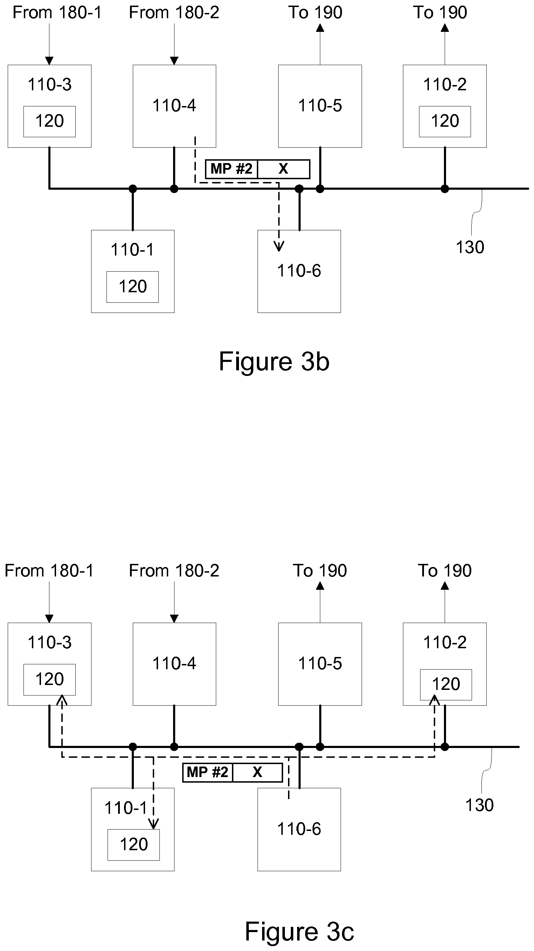

In the following, some aspects of operation of the control arrangement 100 described in the foregoing, according to an embodiment, are further described with references to a method 300 illustrated in Figure 2. The method 300 may be carried out each time a new value for one of the measurement parameters is obtained on basis of the respective sensor data from one of the sensors 180-1, 180-2. In this exemplifying scenario, the method 300 commences from the input control module 110-4 obtaining a new value for a measurement parameter on basis of the sensor data read from the sensor 180-2, as indicted in block 310 and indicated in Figure 3a. In Figure 3a the symbol X represents the new measurement parameter value. The new value of the measurement parameter is provided, via the bus 130, at least to the supervising control module 110-6, as indicated in block 320 and illustrated in Figure 3b. In figure 3b the symbol MP#2 represents an identifier that serves as identification of the measurement parameter and the symbol X represents the new measurement parameter value).

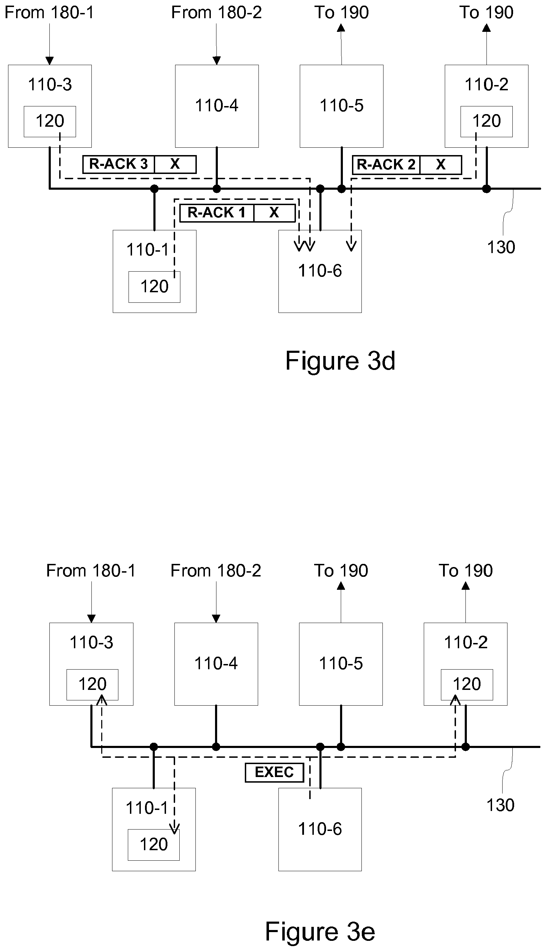

The input control module 110-4 or the supervising control module 110-6 may further provide the new measurement parameter value to one or more other control modules 110, as indicated in block 330. Figure 3c illustrates the option of the supervising control module 110-6 providing the new measurement parameter value to the acting control modules 110-1, 110-2, 110-3. Once the new measurement parameter value has been passed to the acting control modules 110-1, 110-2, 110-3, the supervising control module 110-6 determines the reception of the new measurement parameter value by the acting control modules 110-1, 110-2, 110-3, as indicated in block 340. This may involve receiving the respective reception indications from the acting control modules 110-1, 110-2, 110-3, as illustrated in Figure 3d, or relying on the waiting period *T_{w},* as described in the foregoing. In Figure 3e the symbol R-ACK *k* represents an identifier that serves as an indication of the reception indicator originating from control module *k* and the symbol X represents the new measurement parameter value as received by the control module *k*

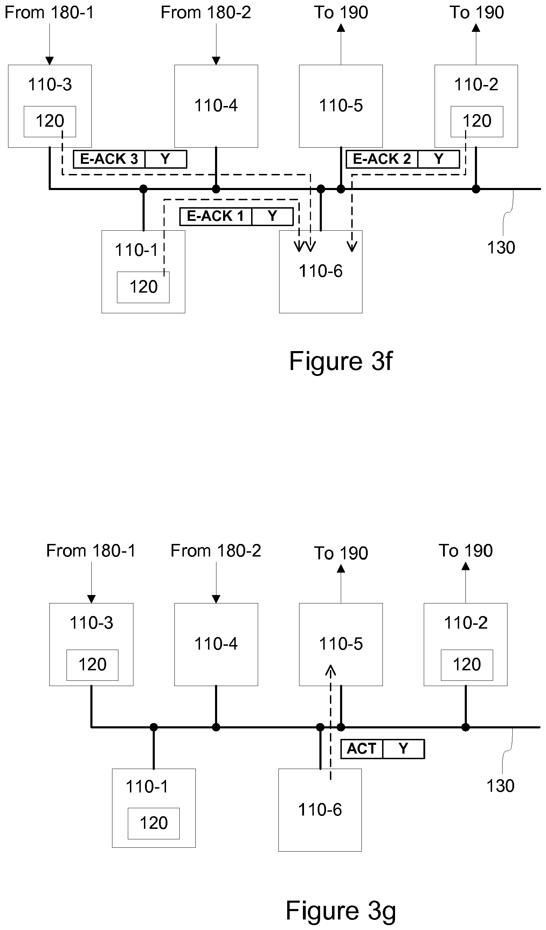

Once having determined successful reception of the new measurement parameter value in at least a predefined number of acting control modules 110-1, 110-2, 110-3, the method 300 proceeds to execute the control function 120 in at least those acting control modules 110-1, 110-2, 110-3 that have provided the reception indication to the supervising control module 110-6, as indicated in block 350. The execution of the control function 120 may be invoked by the execution command issued by the supervising control module 110-6 in response to having received respective reception indications from at least the predefined number of acting control modules 110-1, 110-2, 110-3, as illustrated in Figure 3e. In Figure 3e the symbol EXEC represents an identifier that serves as an indication of the execution command. The acting control modules 110-1, 110-2, 110-3 may report successful execution of the respective instances of the control function 120 by providing the supervising control module 110-6 with the respective execution indications, as illustrated in Figure 3f. In Figure 3f the symbol E-ACK *k* represents an identifier that serves as an indication of the execution indication originating from control module *k* and the symbol Y represents the value of the control parameter derived in the control module *k.*

Once having determined successful execution of the control function 120 in a predefined number of the acting control modules 110-1, 110-2, 110-3, the method 300 proceeds with the supervising control module 110-6 controlling one of the output control modules 110-2, 110-5 to provide the newly derived control parameter value as an output of the control arrangement 100 to the actuator 190. The provision of the new control parameter value may be invoked by the actuation command issued by the supervising control module 110-6 in response to having received respective execution indications from at least the predefined number of acting control modules 110-1, 110-2, 110-3, as illustrated in Figure 3g. In Figure 3g the symbol ACT represents an identifier that serves as an indication of the actuation command and the symbol Y represents the new control parameter value to be provided to the actuator 190.

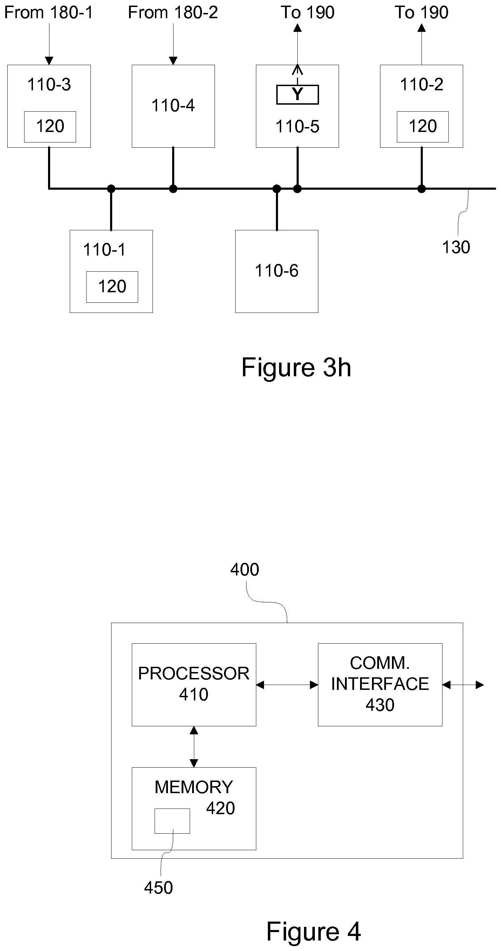

The output control module 110-2, 110-5 employed to provide the new value of the control parameter to the actuator 190 may obtain the new control parameter value directly from the acting control module 110-1, 110-2, 110-3 that has derived the control parameter value selected for provision as an output or it may obtain the new control parameter value via the supervising control module 110-6, e.g. in the actuation command and provide the new control parameter value to the actuator 190 in response to receiving the actuation command, as illustrated in Figure 3h. In Figure 3h the symbol Y represents the value of the control parameter to be provided to the actuator 190.

The control modules 110 of the control arrangement 100 are typically arranged to control operation of the engine 200 without need for external control. Nevertheless, there may be further components or entities coupled or connected to the bus 130 that may be arranged to provide data and/or control information to the control modules 110 of the control arrangement 100 and/or that may receive data and/or control information from the control modules of the control arrangement 100.

As an example, such further components or entities may include a processing unit or a processing module (e.g. a computing apparatus) arranged to receive the obtained new values of measurement parameter(s) from the input control modules 130-3, 110-4 and/or to receive the derived new control parameter values from the acting control modules 110-1, 110-2, 110-3. The processing unit/module may be further arranged to cause displaying the received measurement and/or control parameter values via a user interface and/or cause storing the received measurement/control parameter values into a memory or storage device for monitoring purposes.

Each of the control modules 110 may be provided as hardware means or as a combination of hardware means and software means. In this regard, Figure 4 schematically illustrates some components of an exemplifying apparatus 400 upon which a control module according to an embodiment of the invention may be implemented. The apparatus 400 as illustrated in Figure 4 provides a diagram of exemplary components of an apparatus, which is capable of operating as an acting control module, as a supervising control module, as an input control module and/or as an output control module described in the foregoing.

The apparatus 400 comprises a processor 410 and a memory 420. The processor 410 is configured to read from and write to the memory 420. The apparatus 400 further comprises a communication interface 430 for interfacing the bus 130 (or for interfacing communication media of other type). The apparatus 400 may comprise further components not illustrated in the example of Figure 4.

The memory 420 may store a computer program 450 comprising computer-executable instructions that control the operation of the apparatus 400 when loaded into the processor 410. As an example, the computer program 450 may include one or more sequences of one or more instructions. The computer program 450 may be provided as a computer program code. The processor 410 is able to load and execute the computer program 450 by reading the one or more sequences of one or more instructions included therein from the memory 420. The one or more sequences of one or more instructions may be configured to, when executed by the processor 410, cause the apparatus 400 to carry out operations, procedures and/or functions described in the foregoing in context of the acting control module, the supervising control module, the input control module and/or the output control module
Reference to a processor should not be understood to encompass only programmable processors such as a microprocessor or a microcontroller, but also dedicated circuits such as field-programmable gate arrays (FPGA), application specific circuits (ASIC), signal processors, etc. Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

## Claims

1. A control arrangement (100) for controlling an engine (200), the control arrangement (100) comprising
two or more mutually redundant acting control modules (110-1, 110-2, 110-3) for providing respective instances of a control function (120) configured to derive a control parameter for adjusting operation of the engine (200) at least on basis of at least one measurement parameter that is descriptive of the engine operation,
a supervising control module (110-6) for managing operation of said two or more acting control modules (110-1, 110-2, 110-3), and
a bus (130) for transfer of information, said bus (130) arranged to connect said control modules (110) to each other,
wherein the supervising control module (110-6) is configured to, for each new value of said at least one measurement parameter,
in response to receiving a new value for at least one measurement parameter, determine reception of said new value in one or more acting control modules (110-1, 110-2, 110-3),
in response to having determined reception of said new value in at least a first predefined number of the acting control modules (110-1, 110-2, 110-3), issue an execution command to cause the respective acting control modules (110-1, 110-2, 110-3) to execute the respective instance of the control function (120) to derive a new value for the control parameter, and
in response to at least a second predefined number of the acting control modules (110-1, 110-2, 110-3) having executed the control function (120), issue an actuation command to cause provision of the new value of the control parameter derived by exactly one of the acting control modules (110-1, 110-2, 110-3) for adjusting operation of the engine (200).

2. A control arrangement (100) according to claim 1,
wherein each of said acting control modules (110-1, 110-2, 110-3) is configured to provide a respective reception indication in response to receiving of said new value for at least one measurement parameter, and
wherein said supervising control module (110-6) is configured to determine reception of said new value in a given acting control module (110-1, 110-2, 110-3) in response to receiving the reception indication from the given acting control module (110-1, 110-2, 110-3).

3. A control arrangement (100) according to claim 1 or 2,
wherein each of said acting control modules (110-1, 110-2, 110-3) is configured to provide a respective execution indication in response to having executed the control function (120), and
wherein said supervising control module (110-6) is configured to issue said execution command in response to having received said execution indications from at least said second predefined number of acting control modules (110-1, 110-2, 110-3).

4. A control arrangement (100) according to claim 3, wherein one of said acting control modules (110-1, 110-2, 110-3) is pre-assigned as a master control module and wherein the new value of the control parameter derived by said master control module is provided for adjusting operation of the engine (200).

5. A control arrangement (100) according to claim 4, wherein the supervising control module (110-6) is configured to issue said actuation command in response to having received the execution indication from said master control module.

6. A control arrangement (100) according to claim 4 or 5, wherein the supervising control module (110-6) is configured to assign, in response to a failure to receive the reception indication from the master control module, one of the other acting control modules (110-1, 110-2, 110-3) as the master control module.

7. A control arrangement (100) according to any of claims 4 to 6, wherein the supervising control module (110-6) is configured to assign, in response to a failure to receive the execution indication from the master control module, one of the other acting control modules (110-1, 110-2, 110-3) as the master control module.

8. A control arrangement (100) according to any of claims 1 to 7, wherein at least one said control modules (110) is further configured to operate as an input control module (110-3) that is connectable to a respective sensor (180-1) that is arranged to capture a sensor parameter descriptive of the engine operation, the input control module (110-3) configured to
obtain a value of a measurement parameter on basis of the sensor value from the respective sensor (180-1), and
provide the obtained value of the measurement parameter to one or more other control modules (110) via the bus (130).

9. A control arrangement (100) according to any of claims 1 to 8, further comprising a dedicated input control module (110-4) that is connectable to a respective sensor (180-2) that is arranged to capture a sensor parameter descriptive of the engine operation, the input control module (110-4) configured to
obtain a value of a measurement parameter on basis of the sensor value from the respective sensor (180-2), and
provide the obtained value of the measurement parameter to one or more other control modules (110) via the bus (130).

10. A control arrangement (100) according to any of claims 1 to 9, wherein at least one said control modules (110) is further configured to operate as an output control module (110-2) that is connectable to an actuator (190) that is arranged to adjust operation of the engine (200) on basis of the control parameter, the output control module (110-2) configured to provide the new value of the control parameter to said actuator (190) in response to receiving said actuation command.

11. A control arrangement (100) according to any of claims 1 to 10, further comprising a dedicated output control module (110-5) that is connectable to an actuator (190) that is arranged to adjust operation of the engine (200) on basis of the control parameter, the output control module (110-5) configured to provide the new value of the control parameter to said actuator (190) in response to receiving said actuation command.

12. A control arrangement (100) according to any of claims 1 to 11, wherein one of said control modules (110) is further configured to operate as the supervising control module (110-6).

13. A control arrangement (100) according to any of claims 1 to 11, wherein said supervising control module (110-6) is a dedicated supervising control module (110-6).

14. A control arrangement (100) according to any of claims 1 to 13, wherein the engine (200) comprises an internal combustion engine.

15. A control arrangement (100) according to claim 14, wherein said internal combustion engine comprises a reciprocating piston engine.

16. A method (300) for controlling an engine (200) by using a control arrangement (100) comprising
two or more mutually redundant acting control modules (110-1, 110-2, 110-3) for providing respective instances of a control function (120) configured to derive a control parameter for adjusting operation of the engine (200) at least on basis of at least one measurement parameter that is descriptive of the engine operation,
a supervising control module (110-6) for managing operation of said two or more acting control modules (110-1, 110-2, 110-3), and
a bus (130) for transfer of information, said bus (130) arranged to connect said control modules (110) to each other,
wherein the method (300) comprises, for each new value of said at least one measurement parameter,
determining (330, 340), in response to receiving (310, 320) a new value for at least one measurement parameter, reception of said new value in one or more acting control modules (110-1, 110-2, 110-3),
issuing (350), in response to having determined reception of said new value in at least a first predefined number of the acting control modules (110-1, 110-2, 110-3), an execution command to cause the respective acting control modules (110-1, 110-2, 110-3) to execute the respective instance of the control function (120) to derive a new value for the control parameter, and
issuing (360), in response to at least a second predefined number of the acting control modules (110-1, 110-2, 110-3) having executed the control function (120), an actuation command to cause provision of the new value of the control parameter derived by exactly one of the control modules (110-1, 110-2, 110-3) for adjusting operation of the engine (200).

## Patentansprüche

1. Steueranordnung (100) zum Steuern eines Motors (200), wobei die Steueranordnung (100) Folgendes umfasst
zwei oder mehr gegenseitig redundante agierende Steuermodule (110-1, 110-2, 110-3) zum Bereitstellen von jeweiligen Instanzen einer Steuerfunktion (120), die dazu ausgelegt sind, einen Steuerparameter zum Anpassen eines Betriebs des Motors (200) mindestens auf Basis von mindestens einem Messparameter, der den Motorbetrieb beschreibt, abzuleiten,
ein überwachendes Steuermodul (110-6) zum Verwalten eines Betriebs der zwei oder mehr agierenden Steuermodule (110-1, 110-2, 110-3) und
einen Bus (130) für eine Übertragung von Informationen, wobei der Bus (130) angeordnet ist, die Steuermodule (110) miteinander zu verbinden,
wobei das überwachende Steuermodul (110-6) für jeden neuen Wert des mindestens einen Messparameters zu Folgendem ausgelegt ist
in Reaktion auf das Empfangen eines neuen Wertes für mindestens einen Messparameter Bestimmen eines Empfangs des neuen Wertes in einem oder mehreren agierenden Steuermodulen (110-1, 110-2, 110-3),
in Reaktion darauf, einen Empfang des neuen Wertes in mindestens einer vordefinierten Anzahl von agierenden Steuermodulen (110-1, 110-2, 110-3) bestimmt zu haben, Ausgeben eines Ausführungsbefehls, um die jeweiligen agierenden Steuermodule (110-1, 110-2, 110-3) zu veranlassen, die jeweilige Instanz der Steuerfunktion (120) auszuführen, um einen neuen Wert für den Steuerparameter abzuleiten, und
in Reaktion darauf, dass mindestens eine zweite vordefinierte Anzahl von agierenden Steuermodulen (110-1, 110-2, 110-3) die Steuerfunktion (120) ausgeführt hat, Ausgeben eines Betätigungsbefehls, um eine Bereitstellung des neuen Wertes des Steuerparameters, der von genau einem der agierenden Steuermodule (110-1, 110-2, 110-3) abgeleitet wurde, zum Anpassen eines Betriebs des Motors (200) zu veranlassen.

2. Steueranordnung (100) nach Anspruch 1,
wobei jedes der agierenden Steuermodule (110-1, 110-2, 110-3) dazu ausgelegt ist, in Reaktion auf das Empfangen des neuen Wertes für mindestens einen Messparameter eine jeweilige Empfangsanzeige bereitzustellen, und
wobei das überwachende Steuermodul (110-6) dazu ausgelegt ist, in Reaktion auf das Empfangen der Empfangsanzeige in einem gegebenen agierenden Steuermodul (110-1, 110-2, 110-3) den Empfang des neuen Wertes im gegebenen agierenden Steuermodul (110-1, 110-2, 110-3) zu bestimmen.

3. Steueranordnung (100) nach Anspruch 1 oder 2, wobei jedes der agierenden Steuermodule (110-1, 110-2, 110-3) dazu ausgelegt ist, in Reaktion darauf, dass es die Steuerfunktion (120) ausgeführt hat, eine jeweilige Ausführungsanzeige bereitzustellen, und
wobei das überwachende Steuermodul (110-6) dazu ausgelegt ist, in Reaktion darauf, dass es die Ausführungsanzeigen von der mindestens zweiten vordefinierten Anzahl von agierenden Steuermodulen (110-1, 110-2, 110-3) empfangen hat, den Ausführungsbefehl auszugeben.

4. Steueranordnung (100) nach Anspruch 3, wobei eines der Steuermodule (110-1, 110-2, 110-3) vorab als ein Hauptsteuermodul zugewiesen wird und wobei der neue Wert des Steuerparameters, der vom Hauptsteuermodul abgeleitet wurde, zum Anpassen eines Betriebs des Motors (200) bereitgestellt wird.

5. Steueranordnung (100) nach Anspruch 4, wobei das überwachende Steuermodul (110-6) dazu ausgelegt ist, in Reaktion darauf, dass es die Ausführungsanzeige vom Hauptsteuermodul empfangen hat, den Betätigungsbefehl auszugeben.

6. Steueranordnung (100) nach Anspruch 4 oder 5, wobei das überwachende Steuermodul (110-6) dazu ausgelegt ist, in Reaktion auf ein Fehlschlagen des Empfangs der Empfangsanzeige vom Hauptsteuermodul eines der anderen agierenden Steuermodule (110-1, 110-2, 110-3) als das Hauptsteuermodul zuzuweisen.

7. Steueranordnung (100) nach einem der Ansprüche 4 bis 6, wobei das überwachende Steuermodul (110-6) dazu ausgelegt ist, in Reaktion auf ein Fehlschlagen des Empfangs der Ausführungsanzeige vom Hauptsteuermodul eines der anderen agierenden Steuermodule (110-1, 110-2, 110-3) als das Hauptsteuermodul zuzuweisen.

8. Steueranordnung (100) nach einem der Ansprüche 1 bis 7, wobei mindestens eines der Steuermodule (110) ferner dazu ausgelegt ist, als ein Eingangssteuermodul (110-3) betrieben zu werden, das mit einem jeweiligen Sensor (180-1) verbindbar ist, der angeordnet ist, einen Sensorparameter zu erfassen, der den Motorbetrieb beschreibt, wobei das Eingangssteuermodul (110-3) zu Folgendem ausgelegt ist
Erhalten eines Wertes eines Messparameters auf Basis des Sensorwertes vom jeweiligen Sensor (180-1) und Bereitstellen des erhaltenen Wertes des Messparameters via den Bus (130) für ein oder mehrere andere Steuermodule (110).

9. Steueranordnung (100) nach einem der Ansprüche 1 bis 8, die ferner ein dediziertes Eingangssteuermodul (110-4) umfasst, das mit einem jeweiligen Sensor (180-2) verbindbar ist, der angeordnet ist, einen Sensorparameter zu erfassen, der den Motorbetrieb beschreibt, wobei das Eingangssteuermodul (110-4) zu Folgendem ausgelegt ist
Erhalten eines Wertes eines Messparameters auf Basis des Sensorwertes vom jeweiligen Sensor (180-2) und Bereitstellen des erhaltenen Wertes des Messparameters via den Bus (130) für ein oder mehrere andere Steuermodule (110).

10. Steueranordnung (100) nach einem der Ansprüche 1 bis 9, wobei mindestens eines der Steuermodule (110) ferner dazu ausgelegt ist, als ein Ausgangssteuermodul (110-2) betrieben zu werden, das mit einem Aktuator (190) verbindbar ist, der angeordnet ist, einen Betrieb des Motors (200) auf Basis des Steuerparameters anzupassen, wobei das Ausgangssteuermodul (110-2) dazu ausgelegt ist, in Reaktion auf das Empfangen des Betätigungsbefehls den neuen Wert des Steuerparameters für den Aktuator (190) bereitzustellen.

11. Steueranordnung (100) nach einem der Ansprüche 1 bis 10, die ferner ein dediziertes Ausgangssteuermodul (110-5) umfasst, das mit einem Aktuator (190) verbindbar ist, der angeordnet ist, einen Betrieb des Motors (200) auf Basis des Steuerparameters anzupassen, wobei das Ausgangssteuermodul (110-5) dazu ausgelegt ist, in Reaktion auf das Empfangen des Betätigungsbefehls den neuen Wert des Steuerparameters für den Aktuator (190) bereitzustellen.

12. Steueranordnung (100) nach einem der Ansprüche 1 bis 11, wobei eines der Steuermodule (110) ferner dazu ausgelegt ist, als das überwachende Steuermodul (110-6) betrieben zu werden.

13. Steueranordnung (100) nach einem der Ansprüche 1 bis 11, wobei das überwachende Steuermodul (110-6) ein dediziertes überwachendes Steuermodul (110-6) ist.

14. Steueranordnung (100) nach einem der Ansprüche 1 bis 13, wobei der Motor (200) einen Verbrennungsmotor umfasst.

15. Steueranordnung (100) nach Anspruch 14, wobei der Verbrennungsmotor einen Hubkolbenmotor umfasst.

16. Verfahren (300) zum Steuern eines Motors (200) unter Verwendung einer Steueranordnung (100), das Folgendes umfasst
zwei oder mehr gegenseitig redundante agierende Steuermodule (110-1, 110-2, 110-3) zum Bereitstellen von jeweiligen Instanzen einer Steuerfunktion (120), die dazu ausgelegt sind, einen Steuerparameter zum Anpassen eines Betriebs des Motors (200) mindestens auf Basis von mindestens einem Messparameter, der den Motorbetrieb beschreibt, abzuleiten,
ein überwachendes Steuermodul (110-6) zum Verwalten eines Betriebs der zwei oder mehr agierenden Steuermodule (110-1, 110-2, 110-3) und
einen Bus (130) für eine Übertragung von Informationen, wobei der Bus (130) angeordnet ist, die Steuermodule (110) miteinander zu verbinden,
wobei das Verfahren (300) für jeden neuen Wert des mindestens einen Messparameters Folgendes umfasst, Bestimmen (330, 340) in Reaktion auf das Empfangen (310, 320) eines neuen Wertes für mindestens einen Messparameter eines Empfangs des neuen Wertes in einem oder mehreren agierenden Steuermodulen (110-1, 110-2, 110-3),
Ausgeben (350) in Reaktion darauf, einen Empfang des neuen Wertes in mindestens einer vordefinierten Anzahl von agierenden Steuermodulen (110-1, 110-2, 110-3) bestimmt zu haben, eines Ausführungsbefehls, um die jeweiligen agierenden Steuermodule (110-1, 110-2, 110-3) zu veranlassen, die jeweilige Instanz der Steuerfunktion (120) auszuführen, um einen neuen Wert für den Steuerparameter abzuleiten, und
Ausgeben (360) in Reaktion darauf, dass mindestens eine zweite vordefinierte Anzahl von agierenden Steuermodulen (110-1, 110-2, 110-3) die Steuerfunktion (120) ausgeführt hat, eines Betätigungsbefehls, um eine Bereitstellung des neuen Wertes des Steuerparameters, der von genau einem der Steuermodule (110-1, 110-2, 110-3) abgeleitet wurde, zum Anpassen eines Betriebs des Motors (200) zu veranlassen.

## Revendications

1. Agencement de contrôle (100) pour contrôler un moteur (200), l'agencement de contrôle (100) comprenant :
au moins deux modules de contrôle d'action à redondance mutuelle (110-1, 110-2, 110-3) pour fournir des instances respectives d'une fonction de contrôle (120) configurée pour obtenir un paramètre de contrôle pour régler le fonctionnement du moteur (200) au moins sur la base d'au moins un paramètre de mesure représentatif du fonctionnement du moteur ;
un module de contrôle de supervision (110-6) pour gérer le fonctionnement desdits au moins deux modules de contrôle d'action (110-1, 110-2, 110-3) ; et
un bus (130) pour transférer une information, ledit bus (130) étant conçu pour connecter lesdits modules de contrôle (110) les uns aux autres,
le module de contrôle de supervision (110-6) étant configuré, pour chaque nouvelle valeur dudit au moins un paramètre de mesure, pour :
en réponse à la réception d'une nouvelle valeur pour au moins un paramètre de mesure, déterminer la réception de ladite nouvelle valeur dans un ou plusieurs modules de contrôle d'action (110-1, 110-2, 110-3) ;
en réponse à la détermination de la réception de ladite nouvelle valeur dans au moins un premier nombre prédéfini des modules de contrôle d'action (110-1, 110-2, 110-3), émettre une commande d'exécution pour amener les modules de contrôle d'action (110-1, 110-2, 110-3) respectifs à exécuter l'instance respective de la fonction de contrôle (120) pour obtenir une nouvelle valeur pour le paramètre de contrôle ; et
en réponse à l'exécution de la fonction de contrôle (120) par au moins un second nombre prédéfini des modules de contrôle d'action (110-1, 110-2, 110-3), émettre une commande d'actionnement pour provoquer la fourniture de la nouvelle valeur du paramètre de contrôle obtenu par exactement un des modules de contrôle d'action (110-1, 110-2, 110-3) pour régler le fonctionnement du moteur (200).

2. Agencement de contrôle (100) selon la revendication 1,
dans lequel chacun desdits modules de commande d'action (110-1, 110-2, 110-3) est configuré pour fournir une indication de réception respective en réponse à la réception de ladite nouvelle valeur pour au moins un paramètre de mesure ; et
dans lequel ledit module de contrôle de supervision (110-6) est configuré pour déterminer la réception de ladite nouvelle valeur dans un module de contrôle d'action (110-1, 110-2, 110-3) donné en réponse à la réception de l'indication de réception en provenance du module de contrôle d'action (110-1, 110-2, 110-3) donné.

3. Agencement de contrôle (100) selon la revendication 1 ou 2,
dans lequel chacun desdits modules de commande d'action (110-1, 110-2, 110-3) est configuré pour fournir une indication d'exécution respective en réponse à l'exécution de la fonction de contrôle (120) ; et
dans lequel ledit module de contrôle de supervision (110-6) est configuré pour émettre ladite commande d'exécution en réponse à la réception desdites indications d'exécution en provenance au moins dudit second nombre prédéfini de modules de contrôle d'action (110-1, 110-2, 110-3).

4. Agencement de contrôle (100) selon la revendication 3, dans lequel un desdits modules de contrôle d'action (110-1, 110-2, 110-3) est préaffecté en guise de module de contrôle maître, et dans lequel la nouvelle valeur du paramètre de contrôle obtenu par ledit module de contrôle maître est fournie pour régler le fonctionnement du moteur (200).

5. Agencement de contrôle (100) selon la revendication 4, dans lequel le module de contrôle de supervision (110-6) est configuré pour émettre ladite commande d'actionnement en réponse à la réception de l'indication d'exécution en provenance dudit module de contrôle maître.

6. Agencement de contrôle (100) selon la revendication 4 ou 5, dans lequel le module de contrôle de supervision (110-6) est configuré pour affecter, en réponse à l'échec de la réception de l'indication de réception en provenance du module de contrôle maître, un des autres modules de contrôle d'actionnement (110-1, 110-2, 110-3) en guise de module de contrôle maître.

7. Agencement de contrôle (100) selon l'une quelconque des revendications 4 à 6, dans lequel le module de contrôle de supervision (110-6) est configuré pour affecter, en réponse à l'échec de la réception de l'indication d'exécution en provenance du module de contrôle maître, un des autres modules de contrôle d'actionnement (110-1, 110-2, 110-3) en guise de module de contrôle maître.

8. Agencement de contrôle (100) selon l'une quelconque des revendications 1 à 7, dans lequel au moins un desdits modules de contrôle (110) est en outre configuré pour fonctionner en guise de module de contrôle d'entrée (110-3) qui peut être connecté à un capteur respectif (180-1) conçu pour capturer un paramètre de capteur représentatif du fonctionnement du moteur, le module de contrôle d'entrée (110-3) étant configuré pour :
obtenir une valeur d'un paramètre de mesure sur la base de la valeur de capteur en provenance du capteur respectif (180-1) ; et
fournir la valeur obtenue du paramètre de mesure à un ou plusieurs autres modules de contrôle (110) par l'intermédiaire du bus (130).

9. Agencement de contrôle (100) selon l'une quelconque des revendications 1 à 8, comprenant en outre un module de contrôle d'entrée (110-4) dédié qui peut être connecté à un capteur respectif (180-2) conçu pour capturer un paramètre de capteur représentatif du fonctionnement du moteur, le module de contrôle d'entrée (110-4) étant configuré pour :
obtenir une valeur d'un paramètre de mesure sur la base de la valeur de capteur en provenance du capteur respectif (180-2) ; et
fournir la valeur obtenue du paramètre de mesure à un ou plusieurs autres modules de contrôle (110) par l'intermédiaire du bus (130).

10. Agencement de contrôle (100) selon l'une quelconque des revendications 1 à 9, dans lequel au moins un desdits modules de contrôle (110) est en outre configuré pour fonctionner en guise de module de contrôle de sortie (110-2) qui peut être connecté à un actionneur (190) conçu pour régler le fonctionnement du moteur (200) sur la base du paramètre de contrôle, le module de contrôle de sortie (110-2) étant configuré pour fournir la nouvelle valeur du paramètre de contrôle audit actionneur (190) en réponse à la réception de ladite commande d'actionnement.

11. Agencement de contrôle (100) selon l'une quelconque des revendications 1 à 10, comprenant en outre un module de contrôle de sortie (110-5) dédié qui peut être connecté à un actionneur (190) conçu pour régler le fonctionnement du moteur (200) sur la base du paramètre de contrôle, le module de contrôle de sortie (110-5) étant configuré pour fournir la nouvelle valeur du paramètre de contrôle audit actionneur (190) en réponse à la réception de ladite commande d'actionnement.

12. Agencement de contrôle (100) selon l'une quelconque des revendications 1 à 11, dans lequel un desdits modules de contrôle (110) est en outre configuré pour fonctionner en guise de module de contrôle de supervision (110-6).

13. Agencement de contrôle (100) selon l'une quelconque des revendications 1 à 11, dans lequel ledit module de contrôle de supervision (110-6) est un module de contrôle de supervision (110-6) dédié.

14. Agencement de contrôle (100) selon l'une quelconque des revendications 1 à 13, dans lequel le moteur (200) consiste en un moteur à combustion interne.

15. Agencement de contrôle (100) selon la revendication 14, dans lequel ledit moteur à combustion interne consiste en un moteur à pistons alternatifs.

16. Procédé (300) pour contrôler un moteur (200) au moyen d'un agencement de contrôle (100) comprenant :
au moins deux modules de contrôle d'action à redondance mutuelle (110-1, 110-2, 110-3) pour fournir des instances respectives d'une fonction de contrôle (120) configurée pour obtenir un paramètre de contrôle pour régler le fonctionnement du moteur (200) au moins sur la base d'au moins un paramètre de mesure représentatif du fonctionnement du moteur ;
un module de contrôle de supervision (110-6) pour gérer le fonctionnement desdits au moins deux modules de contrôle d'action (110-1, 110-2, 110-3) ; et
un bus (130) pour transférer une information, ledit bus (130) étant conçu pour connecter lesdits modules de contrôle (110) les uns aux autres,
le procédé (300) consistant, pour chaque nouvelle valeur dudit au moins un paramètre de mesure, à :
déterminer (330, 340), en réponse à la réception (310, 320) d'une nouvelle valeur pour au moins un paramètre de mesure, la réception de ladite nouvelle valeur dans un ou plusieurs modules de contrôle d'action (110-1, 110-2, 110-3) ;
émettre (350), en réponse à la détermination de la réception de ladite nouvelle valeur dans au moins un premier nombre prédéfini des modules de contrôle d'action (110-1, 110-2, 110-3), une commande d'exécution pour amener les modules de contrôle d'action (110-1, 110-2, 110-3) respectifs à exécuter l'instance respective de la fonction de contrôle (120) pour obtenir une nouvelle valeur pour le paramètre de contrôle ; et
émettre (360), en réponse à l'exécution de la fonction de contrôle (120) par au moins un second nombre prédéfini des modules de contrôle d'action (110-1, 110-2, 110-3), une commande d'actionnement pour provoquer la fourniture de la nouvelle valeur du paramètre de contrôle obtenu par exactement un des modules de contrôle (110-1, 110-2, 110-3) pour régler le fonctionnement du moteur (200).
